# EUROPEAN PATENT APPLICATION

(11) **EP 2 924 855 A1**
(43) Date of publication of application: **30.09.2015**
(21) Application number: 13856241.8
(22) Date of filing: 18.10.2013
(51) Int. Cl.: H02K 13/00, H01R 39/08

(54) **SLIP RING STRUCTURE**

(30) Priority: 20.11.2012 JP 2012253873
(71) Applicant: Kabushiki Kaisha Toyota Jidoshokki, Kariya-shi, Aichi 448-8671 (JP)
(72) Inventor: YUMOTO, Shuji, Kariya-shi Aichi 448-8671 (JP); KUBO, Hidehito, Kariya-shi Aichi 448-8671 (JP); HAYASHI, Hirohito, Kariya-shi Aichi 448-8671 (JP); UETSUJI, Kiyoshi, Kariya-shi Aichi 448-8671 (JP); MATSUMOTO, Shohei, Kariya-shi Aichi 448-8671 (JP); YOSHIHARA, Koji, Kariya-shi Aichi 448-8671 (JP); FUJIWARA, Hirofumi, Kariya-shi Aichi 448-8671 (JP)
(74) Representative: TBK
(86) International application number: PCT/JP2013/078325
(87) International publication number: WO 2014/080712

(57) **Abstract**

A slip ring structure for facilitating an adjusting operation after assembling is provided.

A slip ring structure 20 comprises slip rings 30U, 30V and 30W respectively provided to be rotatable about a common axis. The slip ring structure 20 comprises bus bars 40U, 40V and 40W connected to the slip rings 30U, 30V and 30W of the respective phases and extending in the axial direction. In at least one position in the axial direction, one of the bus bars, which has a shorter length in the axial direction, has a greater area in a cross section perpendicular to the axis.

## Description

### Technical Field

The present invention relates to a slip ring structure and in particular to one having a characteristic shape for a bus bar.

### Background Art

In an electrical rotating machine such as a motor, slip rings are used in order to realize conductive contacts between a rotor and a stator. A bus bar is provided for the slip rings in respective phases. However, the bus bars in different phases have respectively different lengths, so they also have different weights. Accordingly, if the slip rings and bus bars for all phases are assembled together and rotated without any modification, their dynamic balance cannot be achieved. In order to solve this, techniques for performing adjustment after assembling are known. For example, there is a method for shaping a portion of the shaft rotating integrally with the bus bars or a method for adding balancing weights in order to increase weight. Patent Document 1 describes a method for increasing weight by attaching "attached balancing members" to a rotor.

### Conventional Art Document

### [Patent Document]

[Patent Document 1] Japanese Patent Application Laid-Open No. 7-163087

### Summary of the Invention

### Problems to be solved by the Invention

However, conventional techniques have problems in that an adjusting operation is required after assembly. For example, if a portion of the shaft is shaped or a balancing weight is attached, the overall shape would change. Also, if a design making room for adjustment is made, the total construction would be larger.

The present invention is made in order to solve the problems and is aimed at providing a slip ring structure that facilitates the adjusting operation after assembly or makes it unnecessary.

### Means for Solving the Problems

In order to solve the above problems, a slip ring structure related to the present invention comprises:
- slip rings for respective phases, respectively provided to be rotatable about a common axis; and
- bus bars connected to respective slip rings and extending in the axial direction, wherein
in at least one position in the axial direction, one of the bus bars, which has a shorter length in the axial direction, has a greater cross sectional area perpendicular to the axis.

In accordance with such a construction, imbalances caused due to differences in lengths of the bus bars are compensated by differences in thicknesses of the bus bars, so dynamic balance thereof is improved.

### Effect of the Invention

In accordance with the slip ring structure of the present invention, imbalances caused due to differences in lengths of the bus bars is compensated by differences in thicknesses of the bus bars, so dynamic balance thereof is improved, thereby making the adjusting operation after assembly easier or unnecessary.

### Brief Description of the Drawings

Fig. 1 shows a construction of a motor related to a first embodiment of the present invention.
Fig. 2 shows a construction of the slip ring structure in Fig. 1.
Fig. 3 is a cross-sectional view of a construction of the slip ring structure after being assembled.
Fig. 4 is a view of the slip ring structure of Fig. 3 in the direction of the arrow IV.
Fig. 5 shows examples of widths of plate-like portions.

### Embodiments of the Invention

Embodiments of the present invention will be explained below with reference to the attached drawings.

### First Embodiment

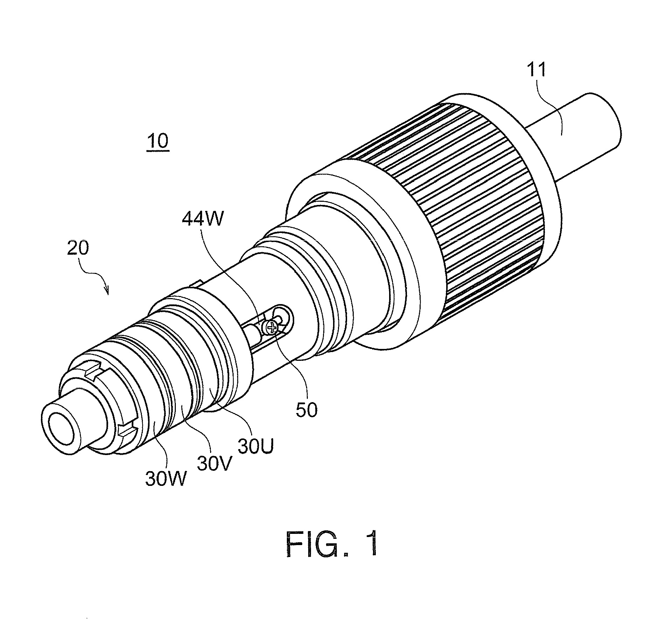

Fig. 1 shows a partial construction of a motor 10 related to a first embodiment of the present invention. The motor 10 is a motor for three-phase alternating current and comprises a shaft 11 and a slip ring structure 20 constituting a rotor. The shaft 11 and the slip ring structure 20 can rotate integrally. The slip ring structure 20 includes slip rings 30U, 30V and 30W for three phases. The shaft 11 and the slip rings 30U, 30V and 30W are rotatable about a common axis.

The slip rings 30U, 30V and 30W contact brushes (not shown) and are electrically connected to an external component such as an inverter through the brushes to supply or receive three-phase alternating current. Those skilled in the art can design the construction of the motor 10 other than the slip ring structure 20 (e.g. coils) as needed, so explanation thereof is omitted here.

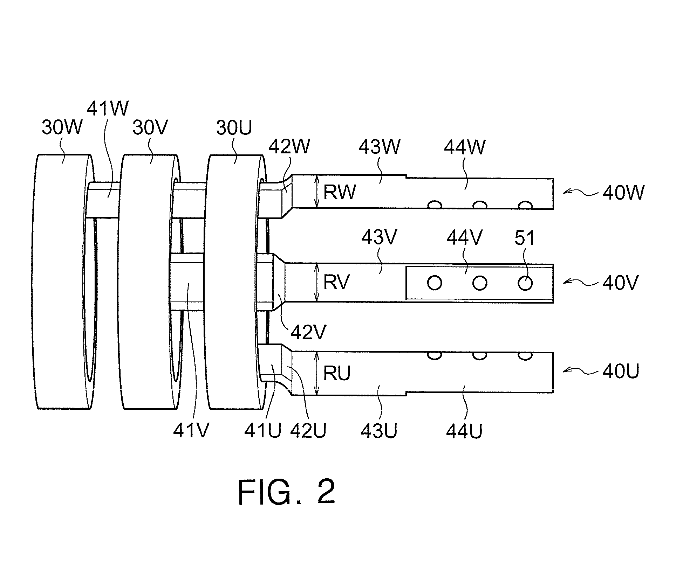

Fig. 2 shows a partial construction of the slip ring structure 20. The slip ring structure 20 comprises the slip rings 30U, 30V and 30W for respective phases and bus bars 40U, 40V and 40W for respective phases. The slip ring 30U and the bus bar 40U correspond to U phase. The slip ring 30V and the bus bar 40V correspond to V phase. The slip ring 30W and the bus bar 40W correspond to W phase. Similarly, in the following, the letters (U, V or W) at the end of reference signs for components represent their respective phases.

The slip rings 30U, 30V and 30W have a common axis and are arranged at equal intervals in an axial direction.

The bus bar 40W is connected to the slip ring 30W. The bus bar 40W comprises a plate-like portion 41W, a connecting portion 42W, a cylindrical portion 43W and a semi-cylindrical portion 44W and extends generally in an axial direction. In particular, the plate-like portion 41W, the cylindrical portion 43W and the semi-cylindrical portion 44W respectively extend in the axial direction. The cylindrical portion 43W and the semi-cylindrical portion 44W are aggregately referred to as a rod portion.

The plate-like portion 41W has a plate-like structure of a rectangular or cylindrical-surface shape with a thickness. The plate like portion 41W connects the rod portion (in particular, the cylindrical portion 43W in this example) to the slip ring 30W through the connecting portion 42W. The cylindrical portion 43W is formed in a cylindrical shape. The semi-cylindrical portion 44W has a shape of a cylinder having the same diameter as the cylindrical portion 43W wherein a portion thereof is ground or shaved off by a plane parallel to the axis, i. e. a semi-cylinder-like shape. Screw holes 51 are provided perpendicular to the plane through the semi-cylindrical portion 44W. Wires or other conducting members are fixed to the screw holes 51 by screws 50 (see Fig. 1).

The cylindrical portion 43W and the semi-cylindrical portion 44W extend in a range which does not overlap any of the slip rings 30U, 30V and 30W in an axial direction. In the example shown in Fig. 2, the cylindrical portion 43W and the semi-cylindrical portion 44W extend rightward to the slip ring 30U which is arranged rightmost in the figure among the slip rings.

The cylindrical portion 43W and the semi-cylindrical portion 44W are provided at the same circumferential position as the plate-like portion 41W but outward to the plate-like portion 41W in a radial direction. The connecting portion 42W has a predetermined dimension in a radial direction and connects the plate-like portion 41W and the cylindrical portion 43W.

The bus bars 40U and 40V also have constructions similar to that of the bus bar 40W described above. However, axial positions of the slip rings are different among the phases, so lengths of the plate-like portions extending in the axial direction to contact the slip rings also differ accordingly among the phases. Further, thicknesses of the bus bars also differ among the phases. Differences among the phases, such as the above, will be explained later.

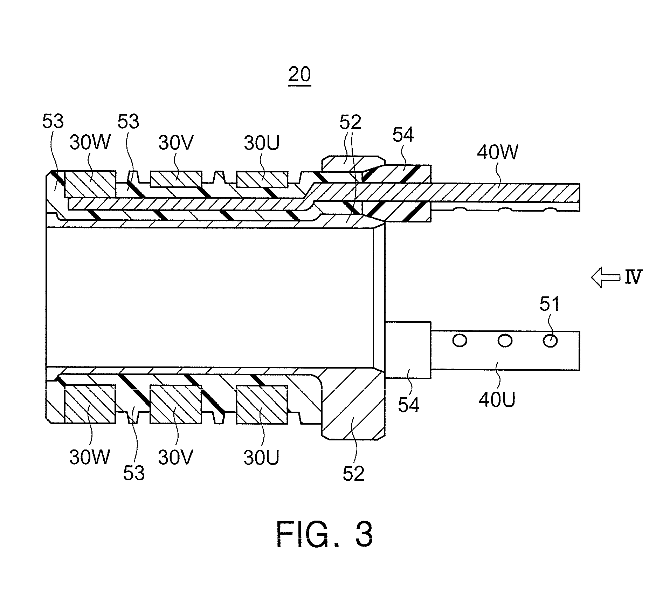

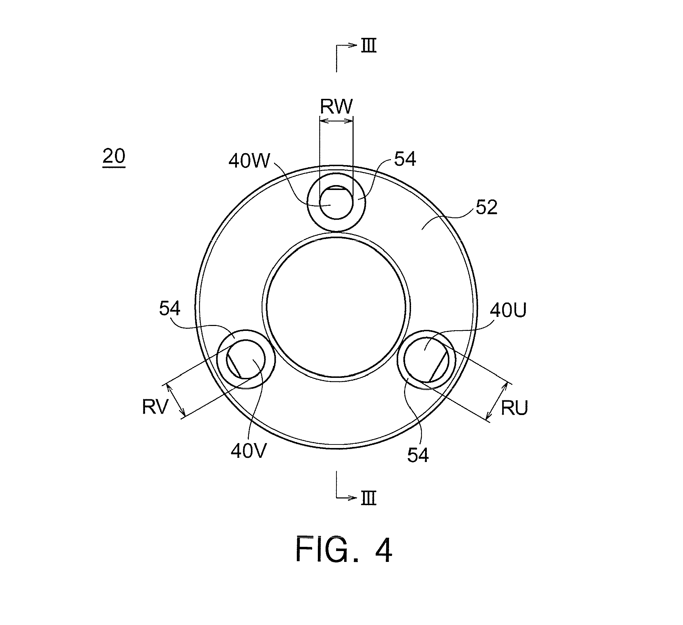

A construction of the slip ring structure 20 after being assembled will be explained referring to Figs. 3 and 4.

Fig. 3 is a cross-sectional view of the slip ring structure 20 after being assembled taken along the cross section by the line III-III in Fig. 4. Fig. 4 is a view of the slip ring structure 20 as seen from the direction of the arrow IV (i.e. from the side of semi-cylindrical portion in the axial direction) in Fig. 3.

The slip ring structure 20 comprises a core material 52 of metal and an insulating resin 53 for insulation. The core material 52 and the slip rings as well as the bus bars of respective phases are insulated by the insulating resin 53. The slip ring 30W contacts the bus bar 40W so that they are electrically conductive, whereas the slip ring 30W is insulated from the slip rings 30V and 30U by the insulating resin 53.

The bus bars of respective phases are covered by the insulating resin 53 at one axial end (e.g. like the bus bar 40W in Fig. 3) but the other end is exposed passing through the core material 52. The regions around the bus bar 40W at axial ends of the portion where the bus bar 40W passes through the core material 52 are insulated from each other by an insulating collar 54 provided around the bus bar 40W. The insulating collar 54 also functions to prevent an O-ring from falling off. Note that the insulating collar 54 may be formed integral with the insulating resin 53.

In the present embodiment, as shown in Fig. 2, if the plate-like portions of respective phases are looked at in terms of their lengths (i.e. in their axial dimensions), the plate-like portion 41W is the longest, the plate-like portion 41V is next longest and the plate-like portion 41U is the shortest. Also, lengths of the rod portions of respective phases (e.g. the length of the cylindrical portion 43W and the semi-cylindrical portion 44W together) are equal or substantially equal. Accordingly, the total lengths of the bus bars differ depending on the lengths of the plate-like portions. That is, the bus bar 40W is the longest, the bus bar 40V is next longest and the bus bar 40U is the shortest.

Thicknesses of the rod portions (i.e. dimensions in a circumferential or radial direction) of respective phases also differ among the phases. In the present embodiment, as shown in Figs. 2 and 4, a shorter bus bar has a greater diameter for the rod portion. That is, diameter RU of the cylindrical portion 43U and the semi-cylindrical portion 44U is greatest, diameter RV of the cylindrical portion 43V and the semi-cylindrical portion 44V is next greatest and diameter RW of the cylindrical portion 43W and the semi-cylindrical portion 44W is smallest.

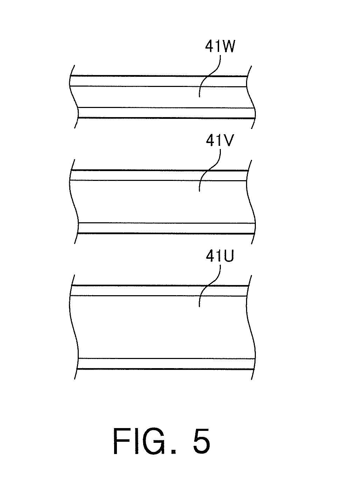

Further, the thicknesses of the plate-like portions (i.e. dimensions in a circumferential or radial direction) of respective phases also differ among the phases. In the example of Fig. 2, the circumferential dimensions (i.e. widths) of the plate-like portions of respective phases differ so that a shorter bus bar has a wider plate-like portion. That is, as shown in Fig. 5 for example, the plate-like portion 41U is widest, the plate-like portion 41V is next widest and the plate-like portion 41W is narrowest.

According to the above construction, one of the bus bars, which has a shorter length in the axial direction, has a greater weight per unit axial length. In the present embodiment, weights of the bus bars 40U, 40V and 40W are equal. Here, if the slip rings 30U, 30V and 30W are constructed to be respectively rotationally symmetric or substantially rotationally symmetric and the bus bars 40U, 40V and 40W are constructed so that their centers of gravity are arranged at an equal or substantially equal distance from the rotation axis, making the weights of the bus bars equal to each other as described above would stabilize the dynamic balance when the slip ring structure 20 rotates integrally about the axis. Also, in the present embodiment, the bus bars 40U, 40V and 40W are arranged at equal circumferential intervals on a circle centered on the axis in a cross section perpendicular to the axis. For example, in Fig. 4, the bus bars (more strictly, their centers of gravity) are arranged to form angles of 120 degrees about the axis between each other. Such a construction can further stabilize the dynamic balance.

As explained above, according to the slip ring structure 20 relatedto the first embodiment of the present invention, imbalance caused due to differences in the lengths of the bus bars is compensated by differences in their thicknesses, so dynamic balance thereof is improved, thereby making the adjusting operation after assembly easier or unnecessary. Also, the room for adjustment would also be smaller or unnecessary. As a result, the total construction becomes compact so that manufacturing operations and cost are reduced.

The following modifications can be made to the above first embodiment.

The shape of the rod portions (e.g. the cylindrical portion 43W and the semi-cylindrical portion 44W) need not always be cylindrical or semi-cylindrical. For example, they may be quadrangular-prismatic or another prismatic shape. Also, they may be shapes having other cross sectional shapes. Regardless of the shapes, if the cross sections of the bus bars for respective phases are constructed to be shapes wherein a dimension corresponding to "diameter" can be defined and so that the shapes are similar or substantially similar to each other, the bus bars can be constructed so that one of the bus bars which has a shorter length has a greater diameter for its rod portion. For example, if the rod portions have square-prismatic shapes, lengths of their diagonal lines can be defined as respective diameters.

In the first embodiment, for example regarding the bus bar 40W, shapes of cross sections of the plate-like portion 41W, the cylindrical portion 43 and the semi-cylindrical portion 44W are respectively constant regardless of the axial positions of the cross sections. In a variation, the shapes of the cross-sections may vary corresponding to their axial position. In such a case, if the bus bars are constructed so that one of the bus bars, which has a shorter length in the axial direction, has a greater cross sectional area in at least one position in the axial direction, the dynamic balance can be improved to some extent.

In the first embodiment, the weights of the bus bars 40U, 40V and 40W are equal. However, they may also be unequal. Regardless of the total weights of the bus bars, if the bus bars are constructed so that one of the bus bars which has a shorter length has a greater weight per unit length, the dynamic balance can be improved to some extent compared with conventional slip ring structures.

The slip ring structure 20 related to the first embodiment is for three-phase alternating current. However, a slip ring structure for two phases or more than or equal to four phases can be constructed in a similar manner.

## Claims

1. A slip ring structure, comprising:
- slip rings for respective phases, respectively provided to be rotatable about a common axis; and
- bus bars connected to respective slip rings and extending in the axial direction, wherein
in at least one position in the axial direction, one of the bus bars, which has a shorter length in the axial direction, has a greater cross sectional area perpendicular to the axis.

2. The slip ring structure of Claim 1, wherein the one of the bus bars, which has the shorter length in the axial direction, has a greater weight per unit length in the axial direction.

3. The slip ring structure of Claim 1, wherein:
- the bus bars comprise respective plate-like portions and respective rod portions;
- the plate-like portions and the rod portions extend in the axial direction;
- the plate-like portions connect the rod portions of the corresponding phases to the slip rings of the corresponding phases;
- the rod portions extend in a range which does not overlap any of the slip rings in the axial direction;
- the one of the bus bars, which has the shorter length in the axial direction, has a greater circumferential dimension for the plate-like portion; and
- the one of the bus bars, which has the shorter length in the axial direction, has a greater diameter for the rod portion.

4. The slip ring structure of Claim 1, wherein the bus bars are arranged at equal circumferential intervals on a circle centered on the axis in a cross section perpendicular to the axis.
